(19) Europäisches Patentamt
European Patent Office
Office européen des brevets

(11) **EP 3 156 921 A1**

(12) **EUROPEAN PATENT APPLICATION**

(43) Date of publication:
**19.04.2017 Bulletin 2017/16**

(51) Int Cl.:
***G06F 17/50*** *(2006.01)*

(21) Application number: **15194478.2**

(22) Date of filing: **13.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.08.2015 EP 15182298**

(71) Applicant: **Volvo Car Corporation**
**40 531 Göteborg (SE)**

(72) Inventor: **Drenth, Edo**
**25437 Helsingborg (SE)**

(74) Representative: **Volvo Car Corporation**
**405 31 Göteborg (SE)**

(54) **METHOD AND SYSTEM FOR CONTROLLING A CO-SIMULATION SYSTEM**

(57) There is provided a method for controlling a co-simulation system comprising a plurality of subsystems, each subsystem representing a physical system, wherein the method comprises; in a first subsystem simulating a first physical system, providing a first time continuous output signal representing a property of the first physical system; filtering the output signal using a continuous moving average filter as an anti-aliasing filter to form a filtered time continuous signal; wherein filtering the output signal comprises: integrating the time continuous signal to form an integrated signal; sampling the integrated signal using a variable step size between consecutive samples; for each sample, forming an average value from the current sample $S_o$ and the nearest previous sample $S_{-1}$, divided by the time between samples h; and forming a filtered time continuous signal from the average values; wherein the method further comprises providing the filtered time continuous signal to a second subsystem simulating a second physical system.

Fig. 3

## Description

Field of the Invention

The present invention relates to a system and method for controlling sampling in a co-simulation system. In particular, the present invention relates to the connection of subsystems in a control or co-simulation system.

Background of the Invention

The automotive industry is increasing its pace in product development. At the same time an increasing number of mechatronic systems are deployed in the final product. These systems are developed virtually and have to be integrated in purpose driven integration platforms with purpose driven fidelity simulation models. The introduction of an interface standard, the so called functional mock-up interface (FMI), is an enabler for this process to be deployed on a wider scale.

The used simulation models of physical systems are created in domain specific authoring tools. These tools are used for its fit for purpose numerical solvers. Because the physical systems mainly are modelled in continuous time domain, the resulting co-simulation models are in fact sampled systems. For this reason it is common knowledge to limit the bandwidth of the modeled system to fit well within the Nyquist frequency.

However, co-simulation of, for instance, mechanical systems have strongly coupled interfaces. In the particular case when motion signals are input, resulting forces and/or torques (or vice versa) have to be fed back. But, the applied motions (or forces and/or torques) create continuous time step responses which induce noise with a relatively large bandwidth.

To alleviate the problems that may occur in the interfaces between coupled systems, a master stepper can be used which controls the sampling rate of the various subsystems, and which calls the co-simulated systems at variable rates. The master stepper makes efforts of error estimation and adjusts the step size for progressing in the simulated time. Moreover, a master stepper can be used together with low-pass (LP) filters for removing unwanted noise from signals provided from one subsystem to another. However, conventional LP-filtering used for anti-aliasing will not prevent the loss of energy over the interfaces. In view of this, attempts are made to reduce the energy loss using artificial mathematical technique, as exemplified in EP2442248. However, in the solution of EP2442248 energy may be lost in the in the interface between subsystems. Moreover, the described method can only be applied to weakly coupled systems, e.g. where the connection frequency is well below the Nyquist frequency.

Hence, there is a need for further improvement of the interface between subsystems in a co-simulation system.

Summary

In view of above-mentioned of the prior art, it is an object of the present invention to provide an improved method and system for control and co-simulation.

According to a first aspect of the invention, there is provided a method for controlling a co-simulation system comprising a plurality of subsystems, each subsystem representing a physical system, wherein the method comprises; in a first subsystem simulating a first physical system, providing a first time continuous output signal representing a property of the first physical system; filtering the output signal using a continuous moving average filter as an anti-aliasing filter to form a filtered time continuous signal; wherein filtering the output signal comprises: integrating the time continuous signal to form an integrated signal; sampling the integrated signal using a variable step size between consecutive samples; for each sample, forming an average value from the current sample $S_0$ and the nearest previous sample $S_{-1}$, divided by the time between samples h; and forming a filtered time continuous signal from the average values; wherein the method further comprises providing the filtered time continuous signal to a second subsystem simulating a second physical system.

Through the above method, a co-simulation system is provided which conserves energy and which improves the overall stability of the system. In particular, the above discussed filter does not deteriorate the energy transfer over the interface between the first and the second subsystem.

The described filter forms an average value from the present sample $S_0$ and the sample $S_{-1}$. This can be seen as a rolling window so that a CMA-filter is formed. By forming the average value using adjacent samples, the step time of the filter can always be the same as the step size of the subsystem providing the signal to be filtered. Accordingly, the filter can be implemented in a subsystem using a variable step size.

In practice, the step size is equivalent to a sampling rate of the filter and of the subsystems in the co-simulation system.

An advantage of using a variable step size is that a smaller step size, i.e. a higher sampling rate, requires more computational resources which in turn increase the simulation time of the system. Thereby, a variable step size offers flexibility in the co-simulation system which together with the above described filter can be implemented to form an efficient co-simulation system without deterioration of the energy transfer between subsystems.

According to one embodiment of the invention, the variable step size of the filter may be based on an analysis of an error of the filtered time continuous signal being provided by the first subsystem. By analyzing the output signal, and in particular by analyzing the occurrence of signal aliasing in the filter, it can be determined if the selected step size is appropriate or not. Furthermore, the step size can be changed if errors in the output signal are observed.

In one embodiment of the invention, the method may further comprise, if an error of the filtered time continuous signal is larger than a first predetermined threshold value, stepwise decreasing the step size until said error of said filtered time continuous signal is below said predetermined threshold value. An error in the filtered single may arise if the step size of the filter is long in relation to the frequency of the output signal to be filtered. Thereby, if an observed error is larger than a predetermined threshold value, it may be possible to reduce the error by decreasing the step size of the sampling, i.e. increasing the sampling rate.

According to one embodiment of the invention, the method may further comprise, if an error of the filtered time continuous signal is smaller than a second predetermined threshold value, stepwise increasing the step size until the error of the filtered time continuous signal is above the second predetermined threshold value. Analogously to what is described above, if the observed error is low, or zero, it may be possible to increase the step size of the filter without noticeable degradation of the quality of the filtered signal, such that filter can operate more efficiently, using less computational resources while still filtering the signal and providing energy conservation.

According to one embodiment of the invention, the step size of the filter may be equal to a step size of the first subsystem.

In one embodiment of the invention, the variable step size may be based on a property of the first subsystem. Thereby, the filtering can be adapted to the subsystem instead of, or as a combination with the above described error analysis of the filtered output signal. This means that it may be possible to reduce or eliminate errors in the filtered signal since the step size may be changed instantaneously, from one sampling pit to the next, as a result of changing properties of the subsystem providing the signal to be filtered.

According to one embodiment of the invention, the variable step size may be based on a frequency of the output signal from the first subsystem. In particular the variable step size may be proportional to a frequency of the output signal from the first subsystem. In a subsystem which can be considered to be in steady state, or static, the frequency of the output signal can be considered to be low, or zero. For example, in a subsystem representing a physical system which is inactive during parts of the simulation, the frequency of the output signal may be zero. In such a scenario, the step size of the filter can be long as long as the subsystem remains in steady state. On the other hand, in a subsystem representing a system operating at a high frequency, or where events such as step responses occur representing events where the state of the system changes, the output signal may comprise high frequencies requiring a shorter step size for accurately filtering the output signal. This variable step size improves the overall system efficiency since it is possible to dynamically vary the step size in accordance with the requirements of the specific subsystems of the co-simulation model. In particular, the step size of the filter can be different for different subsystems in a co-simulation system.

According to a second aspect of the invention, there is provided a co-simulation system comprising a plurality of subsystems, each subsystem representing a physical system, wherein the co-simulation system comprises; a first subsystem representing a first physical system, configured to provide a first time continuous output signal representing a property of the first physical system; a continuous moving average anti aliasing filter connected to an output of the first subsystem and configured form a filtered time continuous signal; wherein the filter comprises: an integrator configured to integrate the time continuous signal to form an integrated signal; a sampling module configured to sample the integrated signal using a variable step size between consecutive samples; an averaging module configured to form an average value from the current sample $S_0$ and the nearest previous sample $S_{-1}$, divided by the time between samples h; and wherein the control and co-simulation system further comprises an output module configured to form a time continuous output signal from the average values formed by the averaging module; and wherein the control and co-simulation system comprises a second subsystem representing a second physical system, the second subsystem being connected to the filter to receive the filtered time continuous signal.

According to one embodiment of the invention, the co-simulation system further comprises a master stepper module configured to control a step size of the first subsystem and the sample rate of said filter. Moreover, the master stepper module may further be configured to control a step size of said second subsystem. In principle, the master stepper module may advantageously be configured to control the step size of all filters and subsystems in the co-simulation system, where the step size of the filter advantageously is equal to the step size of the subsystem providing an output signal to the filter.

Additional effects and features of the second aspect of the invention are largely analogous to those described above in connection with the first aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

Brief Description of the Drawings

These and other aspects of the present invention will now be described in more detail, with reference to the appended drawings showing an example embodiment of the invention, wherein:

Fig. 1 is a schematic illustration of a system according to an embodiment of the invention;
Fig. 2 is a schematic illustration of a filter in a system according to an embodiment of the invention;
Fig. 3 is a flow chart outlining the general steps of a method according to an embodiment of the invention;
Fig. 4 is a graph outlining a functionality of a method and system according to an embodiment of the invention; and
Fig. 5 is a schematic illustration of a system according to an embodiment of the invention.

Detailed Description of Example Embodments

In the present detailed description, various embodiments of the method and system according to embodiments of the present invention will be described. Even though the present invention is described with relation to a system comprising a first and a second subsystem, the disclosure is applicable to a co-simulation comprising any number of subsystems. Moreover, in the present detailed description, the system and method will be described with reference to a co-simulation system. However, the described filter having a variable step size may equally well be utilized in a control system.

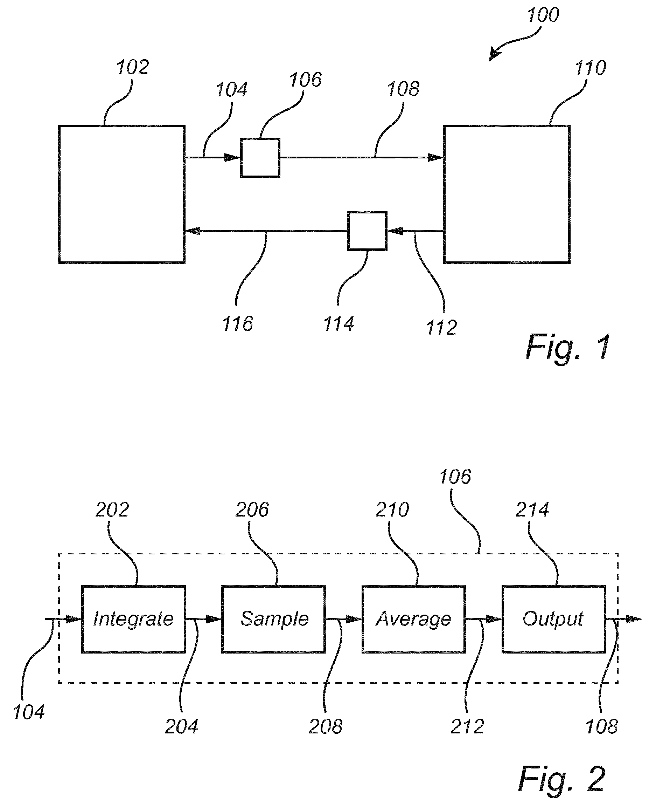

Fig. 1 is a schematic illustration of a co-simulation system 100 according to an embodiment of the invention. The system comprises a first subsystem 102 representing a first physical system, which provides a first time continuous signal 104 as an output signal. The output signal describes a time varying property of the first physical system.

The time continuous signal 104 is provided to a filter 106 in the form of a continuous moving average (CMA) filter acting as an anti-aliasing filter. The functionality of the filter will be further discussed below with reference to Fig. 2. The co-simulation system 100 further comprises a second subsystem 110 representing a second physical system, the second subsystem 110 being connected to the filter 106 to receive the filtered time continuous signal 108. Furthermore, the second subsystem 110 provides a time continuous output signal 112 to a second CMA antialiasing filter 114, similar to the first filter 106. Accordingly the second filter 114 provides a second filtered signal 116 to the first subsystem 102.

Fig. 2 is a schematic illustration of a filter, 106. The filter comprises an integrator 202 configured to integrate the time continuous signal 104 to form an integrated signal 204. The integrated signal 204 is passed to a sampling module 206, or a sampling circuit, which is configured to continuously sample the integrated signal 204 using a variable step size. The sampled signal 208 is then passed to an averaging module 210 configured to form an average value from the current sample $S_0$ and

the nearest previous sample $S_{-1}$, divided by the total sample time h, where h is the step size, i.e. the sample period. The averaging module 210 is connected to an output module 214 which provides the filtered time continuous signal 108 to the second subsystem 110.

A general embodiment of the filter 106 for a time continuous input signal u can be mathematically described as

$$y(z) = \frac{1 - z^{-n}}{nh} \int u \, dt,$$

where n is the integer number, which may also be referred to as the filter order, h is the sample time, t is time and y is the time continuous output signal. For the present filter, n is equal to one, which enables the variation in step size for example in response to a change in the output signal. The second filter 114 is similar to the first filter 106, with the only difference being that the step size of the sampling may be different. Further discussions relating to the functionality of the filter can be found in patent application EP15182298.8 by the same inventor.

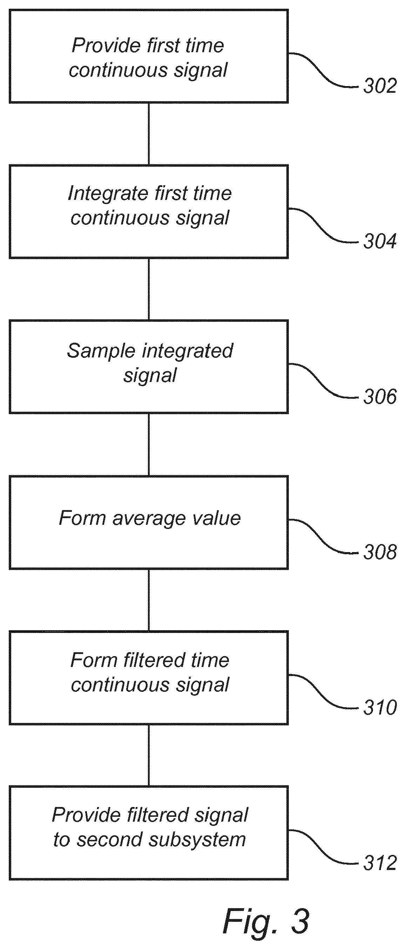

Fig. 3 is a flow chart outlining the general steps of the method according to an embodiment of the invention. The method is in general analogous to the above described co-simulation system 100, and will be described with reference also to Figs. 1 and 2.

The method comprises the steps of providing 302 a first time continuous output signal 104 representing a property of the first physical system. The output signal is filtered using a continuous moving average filter as an anti-aliasing filter. Filtering comprises the steps of integrating 304 the time continuous signal to form an integrated signal, sampling 306 the integrated signal using a variable step size between consecutive samples and forming 310 an average value from the current sample $S_0$ and the nearest previous sample $S_{-1}$, divided by the time between samples h. Based on the average values, the resulting filtered time continuous signal is formed 310 and provided 312 to the second subsystem 110.

The error analysis of the filtered signal may performed in the filter itself, and an error may for example occur if the step size corresponds to a frequency which is lower than the frequency of the output signal from the first subsystem.

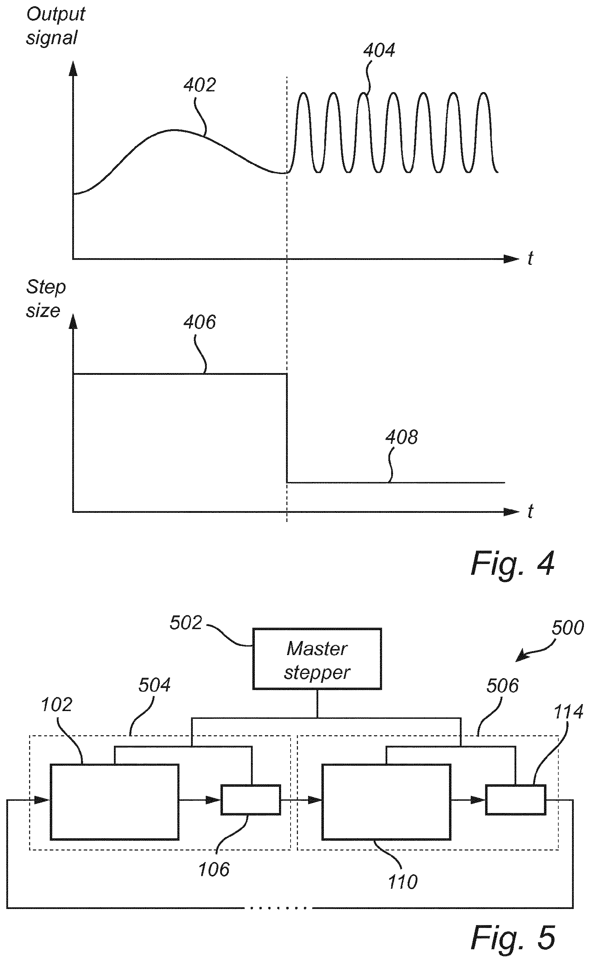

Fig. 4 schematically illustrates how the variable step size may change as a result in the change of frequency of the output signal, represented by the top graph in Fig. 4. As can be seen, when the frequency of the output signal increases, as indicated by the change from a lower frequency 402 to a higher frequency 404, the step size correspondingly is decreased from a larger step size 406 to a smaller step size 408 to enable accurate sampling of the output signal.

Fig. 5 is a schematic illustration of a co-simulation system 500 comprising a master stepper module 502 configured to control the step sizes of the first and second subsystems, 102, 110 and of the first and second filter, 106, 114. The first subsystem 102 and the first filter 106 represents a block 504 where both components have the same step size. In the same way, the second subsystem 110 and the second filter 114 represents a second block 506, where the subsystem 110 and the filter 114 have the same step size. The functionality of the master stepper can be embodied in different ways, such as in a hardware or software environment. The master stepper may call the subsystems at variable rates, where the master stepper makes efforts of error estimation and adjusts the step size for progressing the simulation. By means of the filtering of the output signal, the co-simulation model exhibits energy conservation. Accordingly, it is crucial that the filter can handle the varying step size to maintain energy conservation during changes of the step size. The master stepper can also control a large number of subsystems in a co-simulation system.

In practice, in a co-simulation model, the same solver is typically used to integrate both the subsystem and the corresponding filter, as indicated by the blocks 504 and 506 in Fig. 5.

According to the embodiments described herein, the step size may be based on an error of the filtered signal or on the frequency of the output signal. However, the step size may also be controlled by higher order algorithms where other conditions for determining the step size may be used.

Even though the invention has been described with reference to specific exemplifying embodiments thereof, many different alterations, modifications and the like will become apparent for those skilled in the art. Also, it should be noted that parts of the method and system may be omitted, interchanged or arranged in various ways, the system and method yet being able to perform the functionality of the present invention. In particular, it should be noted that the steps of the method may be performed in a different sequence compared to what is described above, while still providing the same resulting output signal.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for controlling a co-simulation system comprising a plurality of subsystems, each subsystem representing a physical system, wherein said method comprises;

   in a first subsystem simulating a first physical system, providing a first time continuous output signal representing a property of said first physical system; filtering said output signal using a continuous moving average filter as an anti-aliasing filter to form a filtered time continuous signal; wherein filtering said output signal comprises:

   integrating said time continuous signal to form an integrated signal;
   sampling said integrated signal using a variable step size between consecutive samples;
   for each sample, forming an average value from the current sample $S_0$ and the nearest previous sample $S_{-1}$, divided by the time between samples h; and
   forming a filtered time continuous signal from said average values;
   wherein said method further comprises providing said filtered time continuous signal to a second subsystem simulating a second physical system.

2. The method according to claim 1, wherein said variable step size of said filter is based on an analysis of an error of said filtered time continuous signal being provided by said first subsystem.

3. The method according to claim 1 or 2, further comprising, if an error of said filtered time continuous signal is larger than a first predetermined threshold value, stepwise decreasing said step size until said error of said filtered time continuous signal is below said predetermined threshold value.

4. The method according to any one of the preceding claims, further comprising, if an error of said filtered time continuous signal is smaller than a second predetermined threshold value, stepwise increasing said step size until said error of said filtered time continuous signal is above said second predetermined threshold value.

5. The method according to any one of the preceding claims, wherein a step size of said filter is equal to a step size of said first subsystem.

6. The method according to claim 1, wherein said variable step size is based on a property of said first subsystem.

7. The method according to claim 6, wherein said variable step size is based on a frequency of said output signal from said first subsystem.

8. The method according to claim 7, wherein said variable step size is proportional to a frequency of said output signal from said first subsystem.

9. A co-simulation system comprising a plurality of subsystems, each subsystem representing a physical system, wherein said co-simulation system comprises;

a first subsystem representing a first physical system, configured to provide a first time continuous output signal representing a property of said first physical system;

a continuous moving average antialiasing filter connected to an output of said first subsystem and configured form a filtered time continuous signal; wherein said filter comprises:

an integrator configured to integrate said time continuous signal to form an integrated signal;

a sampling module configured to sample said integrated signal using a variable step size between consecutive samples;

an averaging module configured to form an average value from the current sample $S_0$ and the nearest previous sample $S_{-1}$, divided by the time between samples h; and

wherein said control and co-simulation system further comprises an output module configured to form a time continuous output signal from said average values formed by said averaging module; and

wherein said control and co-simulation system comprises a second subsystem representing a second physical system, said second subsystem being connected to said filter to receive said filtered time continuous signal.

10. The co-simulation system according to claim 9, further comprising a master stepper module configured to control a step size of said first subsystem and said sample rate of said filter.

11. The co-simulation system according to claim 10, wherein said master stepper module is further configured to control a step size of said second subsystem.

12. The co-simulation system according to any one of claims 9 to 11, wherein said master stepper module is configured to control said step size of said filter based on a frequency of said output signal from said first subsystem.

13. The method according to any one of claims 9 to 12, wherein said master stepper module is configured to control said step size of said filter to be proportional to a frequency of said output signal from said first subsystem.

*100*

*102*  *104*  *106*  *108*  *110*

*116*  *114*  *112*

*Fig. 1*

*106*

*202*  *206*  *210*  *214*

| Integrate | Sample | Average | Output |

*104*  *204*  *208*  *212*  *108*

*Fig. 2*

Fig. 3

Output
signal

402

404

t

Step
size

406

408

t

**Fig. 4**

502

Master
stepper

500

504

506

102

114

106

110

**Fig. 5**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/063786 A1 (HARKE MICHAEL C [US]) 11 March 2010 (2010-03-11) * the whole document * * paragraph [0011] - paragraph [0014]; figure 2 * * paragraph [0020] - paragraph [0022] * * claim 19 * | 1-13 | INV. G06F17/50 |
| X | BENEDIKT MARTIN ET AL: "Guidelines for the Application of a Coupling Method for Non-iterative Co-simulation", 2013 8TH EUROSIM CONGRESS ON MODELLING AND SIMULATION, IEEE, 10 September 2013 (2013-09-10), pages 244-249, XP032719461, DOI: 10.1109/EUROSIM.2013.52 [retrieved on 2015-01-08] * the whole document * * page 245, column 1, paragraph 3 * * page 247, column 1, last paragraph * * figure 7a * * page 249, column 1, paragraph 4, last sentence * * page 249, column 1, paragraph 5 * | 1-13 | |
| A | Stephen W. Smith: "Chapter 15: Moving Average Filters" In: "The Scientist's and Engineer's guide to Digital Signal Processing", 1 January 1999 (1999-01-01), Carlifornia Technical Publishing, XP055351355, pages 277-284, * the whole document * * equation 15-1 * * page 278, last paragraph; figures 15-1 * * page 280, paragraph 2 * | 1-13 | |

TECHNICAL FIELDS SEARCHED (IPC)

G06F

The present search report has been drawn up for all claims

| Place of search | Date of completion of the search | Examiner |
|---|---|---|
| Munich | 10 March 2017 | Wellisch, J |

EPO FORM 1503 03.82 (P04C01)

**EP 3 156 921 A1**

## ANNEX TO THE EUROPEAN SEARCH REPORT
## ON EUROPEAN PATENT APPLICATION NO.

EP 15 19 4478

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | Publication date | Patent family member(s) | Publication date |
|---|---|---|---|
| US 2010063786 A1 | 11-03-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2442248 A
- EP 15182298 A